Europäisches Patentamt

European Patent Office

Office européen des brevets

(19)

(11) Numéro de publication : **0 449 697 B1**

(12) ## FASCICULE DE BREVET EUROPEEN

(45) Date de publication du fascicule du brevet :
01.06.94 Bulletin 94/22

(51) Int. Cl.⁵ : **A23L 1/20,** A21D 2/36, B02C 4/36

(21) Numéro de dépôt : **91400714.1**

(22) Date de dépôt : **15.03.91**

(54) **Farine de lupin, son procédé d'obtention et ses applications.**

(30) Priorité : **28.03.90 FR 9004205**

(43) Date de publication de la demande :
**02.10.91 Bulletin 91/40**

(45) Mention de la délivrance du brevet :
**01.06.94 Bulletin 94/22**

(84) Etats contractants désignés :
**BE CH DE DK ES FR GB IT LI NL**

(56) Documents cités :
**WO-A-83/00419
GB-A- 1 050 912
GB-A- 2 178 657
JOURNAL OF FOOD SCIENCE, vol.49, no.2,
Mars-Apr. 1984, p.543-546; J.M.AGUILERA,
"AIR CLASSIFICATION AND EXTRUSION OF
NAVY BEANS FRACTIONS"
JOURNAL OF FOOD SCIENCE, vol.51, no.5,
Sept.-Oct 1986, p.1235-1238; E.YA-
NEZ,"EFFECT OF ROASTING ON THE CHEMI-
CAL COMPOSITION...OF LUPIN SEEDS"**

(73) Titulaire : **LA NOELLE SERVICES SOCIETE
ANONYME COOPERATIVE d'INTERET
COLLECTIF AGRICOLE
La Noelle
F-44150 Ancenis (FR)**

(72) Inventeur : **Auger, Isabelle
1, Impasse du Four
F-92150 Suresnes (FR)**
Inventeur : **Corre, Valérie
10, rue Pasteur
F-44110 Chateaubriant (FR)**

(74) Mandataire : **Phélip, Bruno et al
c/o Cabinet Harlé & Phélip
21, rue de La Rochefoucauld
F-75009 Paris (FR)**

## Description

La présente invention a trait au domaine agro-alimentaire ; elle concerne plus particulièrement une farine originale de lupin et notamment de lupin blanc doux (espèce Lupinus albus). L'invention concerne également le procédé d'obtention de cette farine et ses applications.

Le lupin est une plante de la famille des légumineuses papillonacées ; il s'agit d'un protéagineux dont la graine, riche en protéines, est constituée de deux cotylédons en forme de fèves aplaties, entourés d'un tégument protecteur. Cette graine est d'une utilisation courante en alimentation humaine ou animale du fait de sa composition nutritionnelle particulièrement intéressante. On peut par exemple utiliser les amandes pour l'alimentation du bétail, en l'état, ou broyées ; elles peuvent être également consommées en saumure en alimentation humaine, décortiquées ou non.

Cette graine est notamment recherchée pour son apport protéique important ; elle est riche en fibres et pauvre en fer. Les acides aminés et acides gras essentiels y sont présents de façon équilibrée et la graine est exempte de cholestérol.

Les utilisations les plus courantes de la graine de lupin sont sous forme de graines entières mais on peut également l'employer sous forme de farine, obtenue par décorticage et broyage au moyen de broyeurs à broches ou à marteaux. Cette farine peut être utilisée en tant que complément nutritif, par exemple comme lacto-remplaceur pour l'alimentation des veaux.

Les farines complètes obtenues jusqu'à maintenant par les techniques classiques présentent au mieux la granulométrie suivante :

- 30 à 50 % des particules ont une dimension inférieure à 30$\mu$ ,
- 50 à 90 % ont une dimension inférieure à 100$\mu$ .

La granulométrie est limitée à ces valeurs du fait du taux de matière grasse relativement important de la graine de lupin (environ 10 %) ; la graine ne se broie pas facilement car elle s'agglutine au niveau des pores des tamis.

Le document GB-A-2 178 657 divulgue des applications de farine de lupin dans le domaine de la cosmétologie. Associé à une opération ultérieure de tamisage, on arrive à obtenir des particules dont au moins 98 % ont moins de 80$\mu$ de diamètre. Des tamis de cet ordre sont les plus petits utilisables pour ce type de graine grasse.

Ce document GB-A- 2 178 657 prévoit également la possibilité d'enlever la matière grasse des graines pour faciliter l'opération de broyage ; l'utilisation d'un procédé de broyage par voie humide (W0-A-8 300 419) permet également d'obtenir des granulométries très fines. Cependant par ces dernières possibilités de traitement, les farines obtenues ne sont pas complètes (diminution voire absence de la matière grasse ou élimination des éléments solubles).

Tel qu'on l'a décrit dans le "Journal of Food Science, Vol. 49, n° 2, Mars-Apr. 1984, p.543-546 ; JM AGUILERA, Air Classification and Extrusion of Navy Beans Fractions", on sait réaliser des moutures ultrafines de légumineuses du genre haricot (espèce Phaséolus vulgaris) par un double broyage après décortiquage. Un tel procédé qui permet l'obtention d'une farine dont toutes les particules ont des dimensions inférieures à 45 micromètres, n'est cependant utilisable que sur des graines peu grasses (taux de matière grasse inférieur à 5 %) ; il ne peut permettre l'obtention de farine de lupin car la matière broyée s'agglutinerait sur les mailles des tamis utilisés.

Pour une utilisation à titre d'ingrédient ou de complément nutritif dans des préparations alimentaires notamment, la présence de l'ensemble des constituants de la graine de lupin est appréciée et on a donc cherché à utiliser des farines complètes. Cependant, les farines complètes de l'état de la technique se mélangent et se dispersent mal dans les milieux nutritifs de toute nature et cela limite beaucoup les utilisations et les débouchés alimentaires de ce produit.

L'invention a pour but de proposer un produit nouveau à base de graine de lupin, entièrement naturel, susceptible d'être incorporé plus facilement dans différents types de préparation alimentaire pour servir notamment à titre d'ingrédient.

L'invention a pour objet une farine complète de lupin décortiqué, et notamment de lupin blanc doux (espèce Lupinus albus), constituée de particules dont au moins 90 % ont une dimension inférieure à 100$\mu$ et au moins 60 % une dimension inférieure à 30$\mu$. De préférence, au moins 95 % des particules ont une dimension inférieure à 100$\mu$, au moins 60 % une dimension inférieure à 30$\mu$ et au moins 20 % une dimension inférieure à 10$\mu$.

Une telle farine présente de façon étonnante des caractéristiques de solubilité, de stabilité en suspension et de capacité émulsifiante très avantageuses.

L'invention concerne également le procédé d'obtention d'une telle farine. Ce procédé est réalisé en voie sèche et consiste :

- à nettoyer les graines,
- éventuellement à leur faire subir un traitement par la chaleur, notamment un traitement par air chaud sur lit fluidisé dont les paramètres sont adaptés au produit à obtenir,
- à décortiquer les graines, par exemple au moyen d'un procédé de décorticage par chocs,
- à séparer les cotylédons des coques,
- à effectuer un prébroyage des cotylédons au moyen de broyeurs à broches ou à marteaux avec des grilles de 500 à 2000μ ,
- à réaliser une mouture ultrafine de la farine par passage du prébroyat sur au moins une paire de cylindres presseurs lisses dont la pression est réglée en fonction de la granulométrie finale désirée.

La farine ultrafine obtenue est riche en protéines et en fibres ; elle est pauvre en fer. Ce produit, qui est équilibré en acides aminés et acides gras essentiels, est exempt de cholestérol ; la matière grasse qui est naturellement finement dispersée dans les tissus reste particulièrement stable en suspension.

Cette farine présente une grande facilité de dispersion en milieu sec, pâteux ou liquide. Sa stabilité en suspension et sa capacité émulsifiante associées à une manipulation aisée, permettent de l'utiliser pour de nombreux débouchés, à titre par exemple de complément protéique ou en vue d'apport de fibres alimentaires. Ces caractéristiques structurelles et chimiques rendent la farine ultrafine apte à être utilisée comme ingrédient de recettes allégées ; elle peut également être utilisée :

- en charcuterie : pour la préparation de terrines ou de saucisses type pâtes fines,
- en produits céréaliers : dans la panification, pour entrer dans la composition de pains de mie ou de pains spéciaux, ou en pâtisserie, biscuiterie et pâtes alimentaires,
- pour des sauces et/ou plats cuisinés,
- comme apport protéique et fibreux, pour les recettes allégées ...

Cette farine peut également être utilisée à titre de substituant partiel de poudre de lait (alimentation humaine, aliments d'allaitement), ou pour la réalisation de produits nouveaux à base de protéines végétales ; elle peut également éventuellement être utilisée en cosmétologie.

Outre sa très bonne capacité de rétention d'eau et de matière grasse, elle présente des propriétés texturantes et un goût neutre en préparation alimentaire.

Le procédé original de traitement des graines de lupin, détaillé ci-après, consiste à réaliser successivement les opérations présentées dans le tableau I :

TABLEAU I

NETTOYAGE DES GRAINES
|
CALIBRAGE - TRIAGE
|
CUISSON
|
DECORTICAGE PAR CHOCS
|
SEPARATION

AMANDES                                        COQUES
|
PREBROYAGE
|
BROYAGE FIN SUR CYLINDRES

### 1 - Le nettoyage des graines

Cette opération consiste, après réception et stockage des graines entières, à débarrasser soigneusement la grande majorité des impuretés ou des graines étrangères présentes. Les impuretés peuvent consister en des corps étrangers du type poussières, éléments métalliques ou cailloux (éléments dont la densité est supérieure à celle de la graine).

Ce traitement peut par exemple être obtenu par l'intermédiaire d'une série de machines du type :
- séparateur à tamis vibrant (le choix des grilles est fonction de la matière première et en particulier des impuretés et des graines étrangères susceptibles d'être présentes),
- appareil magnétique, par exemple à aimant permanent qui permet de retirer du grain les éléments métalliques tels que les fils de fer ou les clous,
- épierreur du type à aspiration pour l'élimination des éléments denses.

Bien utilisée, cette technique peut permettre d'éliminer 99 % des impuretés et des graines étrangères.

### 2 - Le calibrage

Le calibrage est une opération facultative qui peut être obtenue au moyen de goulottes doseuses vibrantes destinées au tri des graines selon leur calibre, pour le traitement ultérieur de catégories de produit bien déterminées.

Les moyens utilisés doivent permettre l'élimination de la grande majorité des graines cassées et/ou attaquées.

### 3 - Traitement thermique

Cette opération est également facultative, en fonction du produit désiré, mais elle apporte des avantages non négligeables et les graines y seront donc soumises de préférence. Elle consiste à cuire les graines de lupin, par exemple et de préférence par air chaud sur lit fluidisé, à des températures adaptées au résultat désiré. L'air chaud de cuisson peut atteindre des températures allant de la température ambiante à 200°C ; on utilise de préférence des températures comprises entre 85°C et 170°C (air chaud entrant).

Ce traitement a un premier effet mécanique qui a pour objet de faciliter l'opération ultérieure de décorticage ; il permet notamment de rétracter les deux cotylédons dans le tégument.

Ce traitement par la chaleur a en outre un effet physico-chimique : il permet la destruction des facteurs antinutritionnels et de la lipoxygénase (On évite ainsi les problèmes de rancissement et la farine obtenue se conserve mieux).

Les caractéristiques du produit final sont variables selon les paramètres choisis au cours de cette étape, et notamment en fonction du couple temps/température. On peut noter à ce titre que, plus on cuit, plus le facteur d'insolubilité des protéines est augmenté.

Ce traitement thermique, par air chaud sur lit fluidisé, consiste à faire séjourner les graines dans une enceinte munie d'une soufflerie d'air chaud ; les moyens d'entraînement des graines permettent un temps de séjour modulable de l'ordre de 30 secondes à 12 mn.

A titre indicatif, une cuisson des graines pendant 6 mn à une température de 120°C (avec un débit de 750 kg/h) donne d'excellents résultats tant au niveau du décorticage ultérieur, qu'au niveau de la solubilité protéique ou de la conservation de la farine.

### 4 - Décorticage

Cette opération peut être obtenue au moyen d'un décortiqueur centrifuge à choc. La vitesse de rotation de la machine, de l'ordre de 3500 tours/mn, est fonction du produit traité et des résultats désirés (amandes brisées ou non). Cette vitesse est également fonction de l'éventuel traitement précédent des graines par la chaleur.

Ce type de machine, à percussion, peut éventuellement être remplacé par des systèmes à rouleaux munis de surfaces abrasives.

### 5 - Séparation des coques et cotylédons

Cette technique est très délicate à mettre en oeuvre ; elle peut avantageusement être réalisée par des techniques de séparation par air. Ces moyens, conventionnels dans le domaine de la meunerie, permettent une séparation convenable des éléments : on ne retrouve pas plus de 2 % de coques dans les cotylédons et pas plus de 1 % d'amandes dans les coques.

Les graines décortiquées sont ensuite refroidies avant leur broyage, afin d'éviter tout risque d'explosion.

6 - Prébroyage

Cette opération a pour but de préparer le produit au broyage fin ultime.

Ce prébroyage des cotylédons peut être effectué au moyen de broyeurs à marteaux associés à des tamis comportant des pores ayant un diamètre compris entre 500 et 2000μ. A titre indicatif, une grille de prébroyage munie de perforations d'un diamètre de 1,5 mm donne de bons résultats au niveau de l'écoulement de la farine (prébroyat) pour le traitement ultérieur de mouture ultrafine.

7 - Mouture ultrafine

Cette mouture est réalisée par passage d'un rideau régulier de prébroyat sur au moins un dispositif de presse constitué d'une paire de cylindres lisses.

Le passage du prébroyat entre les cylindres qui tournent en sens inverse l'un de l'autre, réalise l'écrasement du produit et l'éclatement des cellules.

Ce ou ces dispositifs presseurs comportent des moyens de réglage de la pression exercée sur le produit. Cette pression est en général inférieure à 80 bars ; elle est de préférence voisine de 10 bars.

De préférence, les deux cylindres d'une même paire ne tournent pas à la même vitesse ; cette vitesse différentielle permet d'améliorer la qualité du broyage (formation de paillettes de produit).

A titre d'exemple, l'installation peut comporter trois groupes successifs de deux cylindres. Le passage du broyat entre chaque groupe de cylindres s'effectue par gravité ; de préférence, la vitesse des cylindres est réglée pour obtenir des vitesses différentielles identiques mais inverses d'un groupe à l'autre dans leur succession.

Lors de cette opération de mouture ultra fine, il y a échauffement des cylindres et il est nécessaire de les refroidir par une circulation d'eau interne. Ces moyens de refroidissement sont adaptés de telle sorte que la température d'eau de sortie ne dépasse jamais 32°C environ.

Toutes les variétés de lupin peuvent être utilisées mais une variété douce sera préférée pour l'absence d'alcaloïdes.

Exemple 1 -

Un exemple d'obtention du produit selon l'invention a été réalisé à partir de graines de lupin blanc doux.

On fait subir aux graines le traitement précédemment décrit, avec une température de cuisson de 120°C et un prébroyage avec des grilles de 500μ. La mouture obtenue est ensuite passée sur les cylindres lisses réglés pour obtenir des granulométries ultrafines.

La farine complète obtenue a été analysée et présente les caractéristiques chimiques définies dans le tableau II.

## TABLEAU II

Humidité : voisine de 8 %

Composition en % de la matière sèche :
| | |
|---|---|
| Protéines (N * 6,25) | 45,0 |
| Matière grasse | 12,0 |
| Sucres solubles | 13,5 |
| Matière minérale | 4,0 |
| Fibres totales | 25,5 → | Fibres solubles : 10,5 |
| dont cellulose | 2,0 ⎫ | Fibres insolubles : 15,5 |
| hemicellulose | 3,0 ⎬ | (méthode de VAN SOEST) |
| lignine | 0,7 ⎭ | |
| Amidon | < 1,0 | |

Principaux acides gras en % de la matière grasse :
Acides gras saturés    14 % (dont 50 % d'acide palmitique)
Acides gras insaturés 86 % (dont 70 % de mono-insaturés)
    - acide oléique      50 %
    - acide linoléique 20 %
    - acide linolénique 7 %

Azote soluble/azote total : (à pH 6,5) : > 65 %

Azote non protéique/azote total : 11,3 %

Facteurs antitrypsiques : < à 1000 TIU/g (Absence)

Composition en acides aminés (en % de matière sèche) :
| | | | |
|---|---|---|---|
| Acide aspartique | 4,3 | Leucine | 3,0 |
| Thréonine | 1,5 | Tyrosine | 2,1 |
| Sérine | 2,1 | Phénylalanine | 1,6 |
| Acide glutamique | 8,7 | Histidine | 0,9 |
| Proline | 1,7 | Lysine | 2,2 |
| Glycine | 1,6 | Arginine | 4,6 |
| Alanine | 1,3 | Méthionine | 0,3 |
| Valine | 1,8 | Cystine | 0,6 |
| Isoleucine | 1,9 | Tryptophane | 0,3 |

Composition de la matière minérale (en % de matière sèche)
| | |
|---|---|
| K | 1,40 |
| P | 0,54 |
| Mn | 0,11 |
| Mg | 0,18 |
| Ca | 0,16 |
| Na | 0,07 |
| Cu | 8 ppm |
| Zn | 48 ppm |
| Fe | 32 ppm |

| | |
|---|---|
| Acide folique | $6,1 \times 10^{-3}$ ppm |
| Vit C | 2 ppm |
| Vit B1 | 0,57 mg/100 g |
| Vit B2 | 0,24 mg/100 g |
| Vit A | 0,01 mg/100 g |

L'analyse granulométrique de la farine ultra fine peut être réalisée selon des protocoles classiques dans le domaine technique, par exemple au moyen d'appareils laser.

Les résultats obtenus apparaissent tableau III ; ils permettent le traçage de la courbe du tableau IV qui montre la répartition granulométrique des particules.

### TABLEAU III

| x en μm (microns) | % inférieur à x |
|---|---|
| 1,0 | 10,78 |
| 2,2 | 13,63 |
| 2,6 | 16,29 |
| 3,0 | 18,78 |
| 3,6 | 22,27 |
| 4,4 | 26,59 |
| 5,2 | 30,58 |
| 6,2 | 35,21 |
| 7,4 | 40,26 |
| 8,6 | 44,77 |
| 10,0 | 49,33 |
| 12,0 | 54,60 |
| 15,0 | 60,25 |
| 18,0 | 64,15 |
| 21,0 | 67,36 |
| 25,0 | 71,22 |
| 30,0 | 75,20 |
| 36,0 | 78,84 |
| 42,0 | 81,80 |
| 50,0 | 85,41 |
| 60,0 | 88,24 |
| 72,0 | 93,01 |
| 86,0 | 96,05 |
| 102,0 | 97,99 |
| 122,0 | 99,18 |
| 146,0 | 99,90 |
| 174,0 | 100,00 |

TABLEAU IV

GRANULOMETRIE Farine Ultrafine Lupin

La mouture ultrafine de cette farine comporte : 98 % de particules qui ont des dimensions inférieures à $100\mu$ , 75 % de particules qui ont des dimensions inférieures à $30\mu$ , et 50 % de particules qui ont des dimensions inférieures à $10\mu$ .

Exemple 2 -

Un autre essai a été réalisé à partir d'un produit identique ne subissant pas l'étape de cuisson et passant dans le matériel de broyage avec des grilles de $700\mu$ . L'analyse granulométrique de la farine obtenue donne les résultats développés dans les tableaux V et VI.

## TABLEAU V

| x en microns | % inférieur à x |
|---|---|
| 1,8 | 8,88 |
| 2,2 | 10,72 |
| 2,6 | 12,19 |
| 3 | 13,41 |
| 3,6 | 14,95 |
| 4,4 | 16,79 |
| 5,2 | 18,58 |
| 6,2 | 20,97 |
| 7,4 | 24,15 |
| 8,6 | 27,56 |
| 10 | 31,47 |
| 12 | 36,3 |
| 15 | 41,5 |
| 18 | 45,09 |
| 21 | 48,41 |
| 25 | 52,93 |
| 30 | 57,77 |
| 36 | 62,81 |
| 42 | 67,38 |
| 50 | 72,99 |
| 60 | 79,12 |
| 72 | 85,04 |
| 86 | 89,96 |
| 102 | 93,63 |
| 122 | 96,47 |
| 146 | 98,86 |
| 174 | 99,84 |
| 206 | 100 |

TABLEAU VI

GRANULOMETRIE Farine Ultrafine Lupin "froid"

x en microns

La mouture de cette farine comporte :
95 % de particules qui ont des dimensions inférieures à 100$\mu$ , 60 % de particules qui ont des dimensions inférieures à 30$\mu$ , 22 % de particules qui ont des dimensions inférieures à 10$\mu$ .

Exemple 3 -

Cet essai a été réalisé avec des paramètres de broyage identiques à ceux de l'exemple 2 mais en faisant subir à la graine une cuisson préalable à 120°C.
L'analyse granulométrique de la farine obtenue donne les résultats énoncés dans les tableaux VII et VIII.

## TABLEAU VII

| x en microns | % inférieur à x |
|---|---|
| 1,8 | 10,51 |
| 2,2 | 12,66 |
| 2,6 | 14,34 |
| 3 | 15,7 |
| 3,6 | 17,42 |
| 4,4 | 19,43 |
| 5,2 | 21,38 |
| 6,2 | 24,01 |
| 7,4 | 27,54 |
| 8,6 | 31,35 |
| 10 | 35,7 |
| 12 | 40,99 |
| 15 | 46,51 |
| 18 | 49,91 |
| 21 | 53,18 |
| 25 | 57,74 |
| 30 | 62,51 |
| 36 | 67,33 |
| 42 | 71,57 |
| 50 | 76,69 |
| 60 | 82,19 |
| 72 | 87,38 |
| 86 | 91,64 |
| 102 | 94,75 |
| 122 | 97,17 |
| 146 | 98,95 |
| 174 | 100 |
| 206 | 100 |

TABLEAU VIII

GRANULOMETRIE Farine Ultrafine Lupin "chaud"

x en microns

La mouture de cette farine comporte :
97 % de particules qui ont des dimensions inférieures à 100µ , 64 % de particules qui ont des dimensions inférieures à 30µ , 28 % de particules qui ont des dimensions inférieures à 10µ .

On peut constater d'après les courbes des tableaux VI et VIII que la cuisson a une petite influence sur la granulométrie ; elle facilite la réduction de la granulométrie des particules (meilleur décorticage).

Le tableau IX représente la courbe de solubilité de différentes farines de lupin, en fonction du pH.

## TABLEAU IX

* La courbe 1 concerne une farine grossière de lupin, correspondant à l'état de la technique, obtenue sans traitement thermique, par broyage uniquement au moyen de broyeurs à marteaux associés à des tamis munis de grilles à 700μ.
* La courbe 2 concerne une farine ultrafine de lupin obtenue par le procédé selon l'invention, sans traitement thermique.
* La courbe 3 concerne une farine ultrafine de lupin obtenue par le procédé selon l'invention, dans des conditions identiques à celles soumises au produit de la courbe 2 mais avec un traitement thermique des graines à 120°C.

Si on compare la courbe 1 par rapport aux deux courbes 2 et 3 on constate que la granulométrie joue un rôle important sur la solubilité, essentiellement à des pH supérieurs à 5,5, lesquels pH sont ceux généralement utilisés en agro-alimentaire.

Par le broyage sous pression, les cellules ne sont plus intactes ; elles sont éclatées, ce qui explique l'accroissement de la solubilité des protéines et matières grasses.

Comme il existe une bonne corrélation entre la solubilité et les propriétés fonctionnelles du produit, telles que le pouvoir émulsifiant, le pouvoir gélifiant ou le pouvoir épaississant, on peut en déduire que la farine ultrafine selon l'invention présente de meilleures propriétés fonctionnelles que les farines de l'état de la technique.

De plus, étant donné sa grande facilité de dispersion en milieu sec, pâteux ou liquide, elle peut facilement être incorporée dans des préparations alimentaires.

Etant donné ses bonnes propriétés fonctionnelles, la farine selon l'invention peut avantageusement être utilisée dans des préparations alimentaires à titre d'agent de texture. Cette utilisation peut être faite notamment pour son rôle d'émulsifiant des protéines (par exemple à titre du substituant partiel des caséinates), pour son pouvoir épaississant (par exemple à titre de substituant de l'amidon), pour son rôle de substituant des matières grasses (pour conserver une texture similaire dans des produits allégés) ou pour son pouvoir de rétention d'eau.

Différents types de farine pourront être obtenus en faisant varier les paramètres de broyage ou en jouant sur les températures et temps de cuisson. Ces valeurs seront choisies en fonction des caractéristiques de la farine que l'on veut mettre en avant.

Le traitement thermique présente certains avantages, notamment en ce qui concerne la destruction des facteurs antinutritionnels et de la lipoxygénase ; il permet aussi une amélioration de l'état microbiologique du produit. Un choix sera à effectuer quant à l'éventuel traitement thermique à appliquer aux graines, en fonction

13

du produit final que l'on désire obtenir.

**Revendications**

1. Farine complète de lupin décortiqué, caractérisée en ce qu'elle est constituée de particules dont :
   - au moins 90 % ont une dimension inférieure à 100μ ,
   - et au moins 60 % ont une dimension inférieure à 30μ.

2. Farine complète de lupin décortiqué, caractérisée en ce qu'elle est constituée de particules dont :
   - au moins 95 % ont une dimension inférieure à 100μ ,
   - au moins 60 % ont une dimension inférieure à 30μ ,
   - au moins 20 % ont une dimension inférieure à 10μ .

3. Farine complète de lupin selon l'une quelconque des revendications 1 ou 2, caractérisée en ce qu'elle est constituée de particules dont :
   - au moins 98 % ont une dimension inférieure à 100μ ,
   - au moins 75 % ont une dimension inférieure à 30μ ,
   - et au moins 50 % ont une dimension inférieure à 13μ.

4. Farine complète de lupin selon l'une quelconque des revendications 1 à 3, caractérisée en ce qu'elle est constituée de lupin blanc doux, espèce Lupinus albus.

5. Procédé d'obtention de farine de lupin selon les revendications 1 - 4, lequel procédé en voie sèche consiste :
   - à nettoyer les graines,
   - à les décortiquer,
   - à séparer les cotylédons des coques,
   - et à effectuer le broyage desdits cotylédons,
   caractérisé en ce que l'opération de broyage consiste, d'une part, en un prébroyage des cotylédons au moyen de broyeurs à marteaux avec des grilles de 500 à 2000μ et, d'autre part, à réaliser une mouture ultrafine de la farine au moyen de cylindres.

6. Procédé selon la revendication 5, caractérisé en ce qu'il consiste, après le nettoyage des graines, à les traiter par la chaleur.

7. Procédé selon la revendication 6, caractérisé en ce que le traitement par la chaleur consiste en un traitement par air chaud sur lit fluidisé pendant 30 secondes à 12 mn à une température comprise entre 85°C et 170°C.

8. Procédé selon l'une quelconque des revendications 5 à 7, caractérisé en ce que le décorticage des graines consiste en un décorticage par chocs.

9. Procédé selon l'une quelconque des revendications 5 à 8, caractérisé en ce que la mouture ultrafine est obtenue par passage du prébroyat sur au moins une paire de cylindres presseurs lisses, la pression soumise à chaque paire de cylindres étant réglée selon la granulométrie désirée.

10. Procédé selon la revendication 9, caractérisé en ce que la mouture ultrafine est obtenue par passage du prébroyat sur une succession de trois paires de cylindres, chaque paire de cylindres étant soumise à une pression voisine de 10 bars et les cylindres d'une même paire tournant en sens inverse l'un de l'autre, à une vitesse différente.

11. Procédé selon la revendication 10, caractérisé en ce que les vitesses différentielles des différentes paires de cylindres sont identiques mais inverses d'un groupe à l'autre.

12. Application du produit selon l'une quelconque des revendications 1 à 4, dans des préparations alimentaires, à titre de complément protéique.

13. Application du produit selon l'une quelconque des revendications 1 à 4 dans des préparations alimentaires à titre d'agent de texture.

EP 0 449 697 B1

**Patentansprüche**

1. Gebrauchsfertiges Mehl aus geschälter Lupine, dadurch gekennzeichnet, daß es aus Teilen besteht, von denen wenigstens 90 % ein Mindestmaß von 100 μm und wenigstens 60 % ein Mindestmaß von 30 μm aufweisen.

2. Gebrauchsfertiges Mehl aus geschälter Lupine, dadurch gekennzeichnet, daß es aus Teilen besteht, von denen wenigstens 95 % ein Mindestmaß von 100 μm, wenigstens 60 % ein Mindestmaß von 30 μm und wenigstens 20 % ein Mindestmaß von 10 μm aufweisen.

3. Gebrauchsfertiges Lupinmehl nach einem der Ansprüche 1 oder 2, dadurch gekennzeichnet, daß es aus Teilen besteht, von denen wenigsten 98 % ein Mindestmaß von 100 μm, wenigstens 75 % ein Mindestmaß von 30 μm und wenigstens 50 % ein Mindestmaß von 10 μm aufweisen.

4. Gebrauchsfertiges Lupinmehl nach einem der Ansprüche 1 bis 3, dadurch gekennzeichnet, daß es aus blankweißer Lupine, insbes. Lupinus albus, besteht.

5. Verfahren zur Herstellung des Lupinmehls nach einem der Ansprüche 1 bis 4, wobei das Verfahren auf dem Trockenweg im Reinigen der Samen, im Schälen derselben, im Trennen der Cotyledone der Schalen und im Zerkleinern der Cotyledone besteht, dadurch gekennzeichnet, daß der Zerkleinerungsvorgang im einen Teil aus einer Vorzerkleinerung der Cotyledone mittels Hammermühlen mit Gittern von 500 bis 2000 μm besteht und im anderen Teil, um ein ultrafeines Mehlmahlgut zu erhalten, mittels Walzen durchgeführt wird.

6. Verfahren nach Anspruch 5, dadurch gekennzeichnet, daß nach dem Reinigen der Samen diese wärmebehandelt werden.

7. Verfahren nach Anspruch 6, dadurch gekennzeichnet, daß die Wärmebehandlung aus einer Behandlung mit Wirbelschicht-Warmluft für 30 Sekunden bis 12 Minuten bei einer Temperatur zwischen 85°C und 170°C besteht.

8. Verfahren nach einem der Ansprüche 5 bis 7, dadurch gekennzeichnet, daß das Samenschälen ein Schälen durch Zusammenstoßen ist.

9. Verfahren nach einem der Ansprüche 5 bis 8, dadurch gekennzeichnet, daß das ultrafeine Mahlgut durch Überleiten des Vorzerkleinerungsgutes auf wenigstens ein Paar Druckglattwalzen erhalten wird, wobei der jedem Walzenpaar aufgebrachte Druck nach der gewünschten Kornklassierung eingestellt wird.

10. Verfahren nach Anspruch 9, dadurch gekennzeichnet, daß das ultrafeine Mahlgut durch Überleiten des Vorzerkleinerungsgutes auf drei aufeinanderfolgende Druckglattwalzen paare erhalten wird, wobei jedes Walzenpaar einem Druck im Bereich von 10 bar unterworfen wird und die Walzen eines Paares gegenläufig sind und mit unterschiedlicher Geschwindigkeit drehen.

11. Verfahren nach Anpruch 10, dadurch gekennzeichnet, daß die differentiellen Geschwindigkeiten der verschiedenen Walzenpaare identisch, aber von einer Gruppe zur anderen invers sind.

12. Verwendung des Produktes nach einem der Ansprüche 1 bis 4 für die Nahrungszubereitung als Proteingehaltsergänzung.

13. Verwendung des Produktes nach einem der Ansprüche 1 bis 4 bei der Nahrungszubereitung als Strukturmittelgröße.

**Claims**

1. Complete flour made of dehusked lupin, characterised in that it comprises particles amongst which:
   - at least 90% are smaller than 100 microns,
   - and at least 60% are smaller than 30 microns.

2. Complete flour made of dehusked lupin, characterised in that it comprises particles amongst which:

- at least 95% are smaller than 100 microns,
- at least 60% are smaller than 30 microns,
- and at least 20% are smaller than 10 microns.

3. Complete flour made of dehusked lupin, according to anyone of claims 1 or 2, characterised in that it comprises particles amongst which:
    - at least 98% are smaller than 100 microns,
    - at least 75% are smaller than 30 microns,
    - and at least 50% are smaller than 10 microns.

4. Complete lupin-flour, according to anyone of claims 1 to 3, characterised in that it comprises soft white lupin, of Lupinus albus kind.

5. Process for obtaining lupin-flour, according to claims 1-4, said dry process consisting in :
    - cleaning the seeds,
    - dehusking them,
    - separating cotyledons from the shells,
    - and crushing said cotyledons,
    characterised in that the crushing operation consists, on the one hand, in precrushing said cotyledons using hammer crushers with grids from 500 to 2000 microns and, on the other, milling the flour ultra-thinly using cylinders.

6. Process according to claim 5, characterised in that in consists, after cleaning the seeds, in heat-treating them.

7. Process according to claim 6, characterised in that the heat-treatment consists of warm air treatment on fluidised bed for 30 seconds to 12 minutes at a temperature comprised between 85°C and 170°C.

8. Process according to anyone of claims 5 to 7, characterised in that the dehusking of the seeds consists of a shock-dehusking.

9. Process according to anyone of claims 5 to 8, characterised in that the ultra-thin grist is obtained by passing the preliminary crushed product over at least a pair of smooth pressing cylinders, whereas the pressure imparted to each pair of cylinders is adjusted according to the desired granulometry.

10. Process according to claim 9, characterised in that the ultra-thin grist is obtained by passing the preliminary crushed product over a succession of three pairs of cylinders, whereas each pair of cylinders is adjusted at a pressure close to 10 bars and the cylinders of a same pair turn in opposite direction to each other, at a different speed.

11. Process according to claim 10, characterised in that the differential speeds of the various pairs of cylinders are identical but opposite from one group to another.

12. Application of the product according to anyone of claims 1 to 4, in food preparations, for protein addition purposes.

13. Application of the product according to anyone of claims 1 to 4 in food preparations as texture agent.